# EUROPÄISCHE PATENTSCHRIFT

(11) **EP 4 079 497 B1**
(45) Veröffentlichungstag und Bekanntmachung des Hinweises auf die Patenterteilung: **28.02.2024**
(21) Anmeldenummer: 21209141.7
(22) Anmeldetag: 18.11.2021
(51) Int. Cl.: B29D 30/00, B29D 30/06

(54) **VERFAHREN ZUM ENTFERNEN VON ANHAFTENDEN MATERIALSCHICHTEN VON FAHRZEUGREIFEN**
METHOD FOR REMOVING ADHERING MATERIAL LAYERS FROM VEHICLE TYRES
PROCÉDÉ D'ENLÈVEMENT DE COUCHES ADHÉSIVES DE MATIÈRE DES PNEUS DE VÉHICULE

(30) Priorität: 19.04.2021 DE 102021203878
(43) Veröffentlichungstag der Anmeldung: 26.10.2022
(73) Patentinhaber: Continental Reifen Deutschland GmbH, 30165 Hannover (DE)
(72) Erfinder: Rubba, Heiko, 30165 Hannover (DE)
(74) Vertreter: Continental Corporation

(56) Entgegenhaltungen:
- EP-A2- 3 666 510
- WO-A1-2020/169579

## Beschreibung

Die Erfindung betrifft ein Verfahren zum Entfernen von anhaftenden Materialschichten von der Oberfläche eines Fahrzeugreifens, eine Vorrichtung zum Entfernen von anhaftenden Materialschichten von der Oberfläche eines Fahrzeugreifens und die Verwendung von elektromagnetischer Strahlung bestimmter Wellenlängen zum energieeffizienten Entfernen von anhaftenden Materialschichten von der Oberfläche eines Fahrzeugreifens.

Der Gegenstand der Erfindung ist in den beigefügten Ansprüchen definiert.

Die Herstellung von leistungsfähigen Fahrzeugreifen ist heutzutage ein komplexes Verfahren, bei welchem auch mit steigender Präzision der zur Fertigung verwendeten Vorrichtungen und auch bei umfassender Schulung der Mitarbeiter, Herstellungsfehler nicht vollständig ausgeschlossen werden können. Insbesondere beim Auftrag von Materialschichten, die am Fahrzeugreifen haften sollen, beispielsweise um diesen mit anderen Elementen zu verbinden, kann es zu Abweichungen kommen, die dazu führen, dass die anhaftende Materialschicht nicht den erforderlichen Spezifikationen entspricht. Im Falle solcher Fertigungsfehler ist es zumeist notwendig, die aufgetragene Schicht wieder zu entfernen.

Ein besonders relevantes Beispiel, bei dem es zu entsprechenden Problemen kommen kann, sind die sogenannten selbstdichtenden Fahrzeugluftreifen, bei denen beispielsweise Dicht- und Verbundmittel auf der Reifeninnenfläche appliziert werden. Entsprechende

Fahrzeugluftreifen sind beispielsweise in der EP 0007982 B1 oder der EP 2168758 A1 offenbart. Vergleichbare Probleme können jedoch auch bei anderen Fertigungsverfahren auftreten.

Vor einer vergleichbaren Aufgabe steht der Fachmann auch, wenn es darum geht, gebrauchte Fahrzeugreifen zu recyceln und damit einer Wiederverwertung zuzuführen. Auch in diesem Fall ist es regelmäßig notwendig, zumindest Teile der anhaftenden Materialschichten von der Oberfläche des Fahrzeugreifens zu entfernen, bevor dieser dem finalen Recycling zugeführt wird.

Sowohl bei der Korrektur von Fertigungsfehlern als auch bei der Aufbereitung von zu recycelnden Fahrzeugreifen ist regelmäßig eine große Adhäsionskraft zu überwinden, um die anhaftenden Materialschichten wieder zu entfernen. Aus dem Stand der Technik ist insoweit bekannt, dass diese Adhäsionskraft durch Erwärmung deutlich reduziert werden kann, sodass der notwendige Arbeitsschritt erleichtert und die Qualität des zu erhaltenden Produkts verbessert werden kann.

Im Stand der Technik erfolgt diese Erwärmung zumeist dadurch, dass der zu bearbeitende Reifen im Wesentlichen komplett erwärmt wird, beispielsweise in einem Wärmeschrank. Infolge dieser Erwärmung ist die anhaftende Materialschicht leichter zu entfernen und der Reifen kann erneut dem Fertigungsvorgang oder dem Recycling zugeführt werden.

Auch wenn sich das vorstehend beschriebene Verfahren mit Blick auf die Entfernung der anhaftenden Materialschichten als leistungsstark erwiesen hat, wird es jedoch regelmäßig als nachteilig empfunden. Dies liegt insbesondere daran, dass der hierbei als Ganzes erwärmte Reifen im Vergleich zu der anhaftenden Materialschicht eine sehr große Masse darstellt, die in diesem Verfahren mit erwärmt werden muss. Die vollständige Erwärmung des gesamten Reifens kostet vergleichsweise viel Zeit und vor allem viel Energie. Darüber hinaus wird regelmäßig als nachteilig empfunden, dass für die Erwärmung der gesamten Reifen regelmäßig große Wärmeschränke benötigt werden, die einen hohen Raumbedarf aufweisen.

An dem aus dem Stand der Technik bekannten Verfahren wird zudem häufig als besonders nachteilig empfunden, dass dieses zu einem Energieeintrag in dem Reifen führt, der in einer beschleunigten Alterung resultieren kann. Bei der Korrektur von Fertigungsfehlern, bei der der von der anhaftenden Materialschicht befreite Fahrzeugreifen anschließend wieder der Fertigung zugeführt werden soll, stellt diese thermische Belastung des Reifens einen Nachteil dar, der insbesondere bei mehrmaliger Korrektur auch dazu führen kann, dass ein derart bearbeiteter Reifen für die weitere Verwendung unbrauchbar wird.

Die Patentschrift WO 2020/169579 A1 offenbart ein Verfahren zur Entfernung von Ablagerungen usw. von einer Reifenoberfläche mittels Laserstrahlung.

Die Aufgabe der vorliegenden Erfindung war es, die Nachteile des Standes der Technik zu beseitigen oder zumindest zu verringern und insbesondere ein Verfahren zum Entfernen von anhaftenden Materialschichten von der Oberfläche eines Fahrzeugreifens anzugeben, welches zeit- und energieeffizienter betrieben werden kann, als die aus dem Stand der Technik bekannten Verfahren.

Hierbei war es eine Aufgabe der vorliegenden Erfindung, dass das anzugebende Verfahren zu einer möglichst geringen thermischen Belastung des Fahrzeugreifens führen sollte.

Es war wünschenswert, dass das anzugebende Verfahren eine hohe Betriebssicherheit aufweisen sollte und insbesondere ohne den Einsatz von gesundheitsschädlichen Chemikalien auskommen sollte. Insoweit war es auch wünschenswert, dass das erfindungsgemäße Verfahren ohne aufwendige zusätzliche Sicherheitsvorkehrungen in einer üblichen Werkshalle betrieben werden können sollte.

Darüber hinaus war es eine Aufgabe der vorliegenden Erfindung, dass das anzugebende Verfahren eine hohe Flexibilität hinsichtlich der Eigenschaften der anhaftenden Materialschicht aufweisen sollte.

Es war eine ergänzende Aufgabe der vorliegenden Erfindung, dass das anzugebende Verfahren sowohl in der Fertigung von neuen Reifen als auch im Recycling von Altreifen einsetzbar sein sollte.

Es war dabei wünschenswert, dass das anzugebende Verfahren insbesondere beim Umgang mit selbstdichtenden Fahrzeugluftreifen besonders leistungsstark sein sollten und insoweit eine besonders gute Entfernungswirkung für anhaftende Dicht- oder Verbundmittel aufweisen sollte.

Darüber hinaus war es eine Aufgabe der vorliegenden Erfindung eine Vorrichtung zum Entfernen von anhaftenden Materialschichten von der Oberfläche eines Fahrzeugreifens anzugeben, die vorzugsweise dazu geeignet sein sollte, dass anzugebende Verfahren auszuführen. Hierbei war es besonders wünschenswert, dass die anzugebende Vorrichtung besonders robust ausgeführt und energieeffizient betrieben werden können sollte.

Mit Blick auf die Vorrichtung war es eine ergänzende Aufgabe der vorliegenden Erfindung, die Vorrichtung so auszugestalten, dass diese für Fahrzeugreifen verschiedener Größe ohne große Anpassung einsetzbar ist.

Darüber hinaus war es eine Aufgabe der vorliegenden Erfindung, die anzugebende Vorrichtung so auszugestalten, dass größere Abschnitte der Oberfläche eines Fahrzeugreifens effektiv bearbeitet werden können.

Abschließend war es eine Aufgabe der vorliegenden Erfindung, eine Verwendung für elektromagnetische Strahlung einer bestimmten Wellenlänge zum energieeffizienten Entfernen von anhaftenden Materialschichten von der Oberfläche eines Fahrzeugreifens anzugeben.

Der Erfinder der vorliegenden Erfindung hat nunmehr erkannt, dass die vorstehend benannten Aufgaben überraschenderweise gelöst werden können, wenn statt einer ganzheitlichen Erwärmung des Fahrzeugreifens lediglich vor allem die anhaftenden Materialschichten erwärmt werden, was durch elektromagnetische Strahlung einer geeigneten Wellenlänge erfolgen kann.

Mit anderen Worten schlägt der Erfinder vor, dass beispielsweise eine einzelne Strahlenquelle ins Innere zwischen die Wülste eines Reifens eingebracht werden kann, um dort die Strahlung im Wesentlichen ausschließlich auf eine dort anhaftende Materialschicht ausgerichtet werden kann, ohne den Reifen in seiner Gesamtstruktur signifikant der Wärme auszusetzen, wobei es durch Rotation des Reifens in einer geeigneten Vorrichtung sogar möglich ist, auf diese Weise eine gleichmäßige Erwärmung größerer Flächen des anhaftenden Materials zu erreichen. Hierdurch wird nicht nur die Gesamtstruktur des Reifens vor einer unnötigen Wärmebelastung geschützt, sondern die Erwärmung der anhaftenden Materialschicht kann auch deutlich schneller und unter Einsatz von weniger Energie erfolgen als in dem aus dem Stand der Technik bekannten Verfahren. Darüber hinaus ist es möglich, dieses Verfahren so auszugestalten, dass im Vergleich mit dem Wärmeschränken deutlich weniger Produktionsfläche benötigt wird und der Prozess zudem besser von Mitarbeitern überwacht werden kann.

Die vorstehend genannten Aufgaben werden somit durch Verfahren und Vorrichtungen gelöst, wie sie in den Ansprüchen definiert sind. Bevorzugte erfindungsgemäße Ausgestaltungen ergeben sich aus den Unteransprüchen und den nachfolgenden Ausführungen.

Solche Merkmale erfindungsgemäßer Verfahren und Vorrichtungen, die nachfolgend als bevorzugt bezeichnet sind, werden in besonders bevorzugten Ausführungsformen mit anderen als bevorzugt bezeichneten Merkmalen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal mit ein oder mehreren weiteren Merkmalen kombiniert wird, die in irgendeinem Ausmaß als bevorzugt bezeichnet werden. Merkmale bevorzugter erfindungsgemäßer Vorrichtungen und Verwendungen ergeben sich aus den Merkmalen bevorzugter Verfahren.

Die Erfindung betrifft ein Verfahren zum Entfernen von anhaftenden Materialschichten von der Oberfläche eines Fahrzeugreifens, umfassend die Schritte:
a) Bereitstellen eines Fahrzeugreifens, wobei die Oberfläche des Fahrzeugreifens zumindest teilweise von einer anhaftenden Materialschicht bedeckt ist,
b) Bestrahlen der anhaftenden Materialschicht mit elektromagnetischer Strahlung zur Erwärmung der anhaftenden Materialschicht, und
c) Mechanisches Auftrennen des Verbundes zwischen der Oberfläche des Fahrzeugreifens und der erwärmten anhaftenden Materialschicht zum Entfernen der anhaftenden Materialschicht.

In dem erfindungsgemäßen Verfahren wird ein Fahrzeugreifen bereitgestellt. Dieser kann beispielsweise aus der Fertigung stammen, weil sich im Verlauf der Fertigung ein Herstellungsfehler gezeigt hat. Alternativ kann es sich auch um einen Fahrzeugreifen handeln, der dem Recycling zugeführt werden soll.

In jedem Fall ist in dem erfindungsgemäßen Verfahren auf der Oberfläche des Fahrzeugreifens eine anhaftende Materialschicht angeordnet, sodass die Oberfläche des Fahrzeugreifens von dieser zumindest teilweise bedeckt ist. Der Ausdruck anhaftende Materialschicht drückt dabei aus, dass die Materialschicht über adhäsive Wechselwirkung mit der Oberfläche des Fahrzeugreifens verbunden ist und nicht etwa beispielsweise durch separate Befestigungsmittel. Bevorzugt ist entsprechend ein erfindungsgemäßes Verfahren, wobei die anhaftende Materialschicht ausschließlich über adhäsive Wechselwirkungen an der Oberfläche des Fahrzeugreifens anhaftet, wobei die anhaftende Materialschicht bevorzugt eine Klebeschicht ist.

Hierbei ist es beispielsweise möglich, dass im Wesentlichen die gesamte Innenseite eines Fahrzeugluftreifens mit einem Dichtmittel belegt ist, wie es beispielsweise bei selbstdichtenden Fahrzeugluftreifen vorgesehen wird. Alternativ können jedoch auch lediglich lokal anhaftende Materialschichten vorliegen, beispielsweise ein mit Adhäsivstoff bedeckter Bereich auf der Oberfläche eines Fahrzeugreifens.

In dem erfindungsgemäßen Verfahren wird nunmehr die anhaftende Materialschicht mit elektromagnetischer Strahlung beaufschlagt. Dies erfolgt erfindungsgemäß so, dass es zur Erwärmung der anhaftenden Materialschicht kommt. Hierbei handelt es sich um eine funktionelle Einschränkung, die einen Einfluss auf die Art der elektromagnetischen Strahlung hat. In Übereinstimmung mit dem fachmännischen Verständnis führt nicht jede elektromagnetische Strahlung zur Erwärmung der anhaftenden Materialschichten. Dies wird maßgeblich vom Absorptionsverhalten der anhaftenden Materialschicht beeinflusst. Der Fachmann ist jedoch in der Lage, die geeignete elektromagnetische Strahlung in Abhängigkeit der physikalisch-chemischen Eigenschaften der anhaftenden Materialschicht auszuwählen oder besonders geeignete Wellenlängen im Rahmen von Routineexperimenten zu identifizieren.

Für eine anhaftende Materialschicht, die beispielsweise über größere Anteile an Wasser verfügt, wären beispielsweise Mikrowellen geeignet, wobei die gleichen Wellen bei ausschließlich aus Kunststoffen bestehenden anhaftenden Materialschichten nicht zu einer Erwärmung der anhaftenden Materialschicht führen würden. Der Erfinder der vorliegenden Erfindung schlägt vor, im Zweifel Strahlung im infraroten Bereich zu benutzen, da diese sich in eigenen Versuchen als besonders geeignet erwiesen hat, im Wesentlichen alle in der Reifenfertigung auftretenden anhaftenden Materialschichten zumindest ausreichend zu erwärmen.

Auch wenn viele Materialien mit elektromagnetischer Strahlung einiger Wellenlängen zumindest minimale Wechselwirkungen zeigen, ist der Ausdruck der Erwärmung im Rahmen der vorliegenden Erfindung praktisch fachmännisch auszulegen. In Übereinstimmung mit dem fachmännischen Verständnis bedeutet der Ausdruck Erwärmung deshalb, dass es im Verfahren zu einer spürbaren Temperaturerhöhung, vorzugsweise um zumindest 10 °C, besonders bevorzugt zumindest 15 °C, ganz besonders bevorzugt zumindest 20 °C, kommt, sodass eine minimale Temperaturerhöhung infolge kleinster Wechselwirkungen nicht als Erwärmung der anhaftenden Materialschicht verstanden wird.

Aus dem funktionalen Merkmal geht auch hervor, dass das Bestrahlen der anhaftenden Materialschicht mit elektromagnetischer Strahlung ursächlich für die Erwärmung der anhaftenden Materialschicht sein soll. In Übereinstimmung mit dem fachmännischen Verständnis bedeutet dies, dass die Erwärmung der anhaftenden Materialschicht zumindest überwiegend durch die elektromagnetische Strahlung, bevorzugt zumindest zu 60 %, besonders bevorzugt zumindest zu 70 %, durch die elektromagnetische Strahlung erfolgt. Das Kontaktieren der anhaftenden Materialschicht, beispielsweise mit einem glühenden Heizdraht, stellt kein Bestrahlen zur Erwärmung im Sinne der vorliegenden Erfindung dar, auch wenn der glühende Heizdraht elektromagnetische Strahlung im Infrarotbereich imitiert, da die Erwärmung ursächlich vor allen Dingen durch den direkten Materialkontakt mit dem heißen Glühdraht erfolgt. Besonders bevorzugt ist ein erfindungsgemäßes Verfahren, wobei die Erwärmung der anhaftenden Materialschicht in Schritt b) zu mehr als 80 %, bevorzugt mehr als 90 %, besonders bevorzugt im Wesentlichen ausschließlich, durch die elektromagnetische Strahlung erfolgt.

In Schritt c) des erfindungsgemäßen Verfahrens erfolgt ein mechanisches Auftrennen des Verbundes, d. h. das Auflösen der adhäsiven Wechselwirkung zwischen der anhaftenden Materialschicht und der Oberfläche des Fahrzeugreifens unter Einsatz mechanischer Kräfte.

Infolge des Schrittes b) ist die anhaftende Materialschicht dabei erwärmt, wodurch das Auftrennen des Verbundes und dadurch auch das Entfernen der anhaftenden Materialschicht erleichtert wird.

Das erfindungsgemäße Verfahren hat sich als besonders leistungsstark erwiesen, wenn die anhaftende Materialschicht im Wesentlichen auf glatten Oberflächen haftet. Auch wenn eine Entfernung von anhaftenden Materialschichten von der zumeist profilierten Lauffläche des Reifens möglich ist, ist das Verfahren besonders effizient an der Reifeninnenfläche, insbesondere von Fahrzeugluftreifen, auszuführen. Bevorzugt ist somit ein erfindungsgemäßes Verfahren, wobei die Oberfläche des Fahrzeugreifens die Reifeninnenfläche ist, wobei bevorzugt die der Lauffläche des Reifens gegenüberliegenden Reifeninnenfläche von der anhaftenden Materialschicht bedeckt ist.

Wie vorstehend erläutert, hat sich das erfindungsgemäße Verfahren als besonders geeignet erwiesen, Dicht- und Verbundmittel zu entfernen, wie sie insbesondere bei selbstdichtenden Fahrzeugluftreifen appliziert werden. Bevorzugt ist daher ein erfindungsgemäßes Verfahren, wobei der Fahrzeugreifen ein Fahrzeugluftreifen, bevorzugt ein selbstdichtender Fahrzeugluftreifen, ist. Bevorzugt ist entsprechend auch ein erfindungsgemäßes Verfahren, wobei die anhaftende Materialschicht durch ein Dicht- oder Verbundmittel gebildet wird, bevorzugt durch ein Dichtmittel.

Auch wenn das erfindungsgemäße Verfahren grundsätzlich für eine Vielzahl von Fahrzeugreifen einsetzbar ist, hat es sich als besonders effizient zur Bearbeitung von Fahrzeugreifen erwiesen, die eine schwefelvernetzte Kautschukmischung umfassen, insbesondere da entsprechende Fahrzeugreifen eine große Belastbarkeit aufweisen und beim mechanischen Auftrennen des Verbundes zwischen der Oberfläche des Fahrzeugreifens und der erwärmten anhaftenden Materialschicht zumeist nicht beschädigt werden. Bevorzugt ist deshalb ein erfindungsgemäßes Verfahren, wobei der Fahrzeugreifen eine schwefelvernetzte Kautschukmischung umfasst. Besonders bevorzugt ist insoweit ein erfindungsgemäßes Verfahren, wobei der Fahrzeugreifen vor dem Verfahren noch nicht in einem Fahrzeug eingesetzt wurde oder nach dem Verfahren einem Recycling zugeführt wird.

Es kann als ein Vorteil des erfindungsgemäßen Verfahrens gesehen werden, dass dieses, insbesondere beim Einsatz von zumeist gut absorbierter Infrarotstrahlung, für eine breite Anzahl von Materialien geeignet ist und insofern eine hohe Flexibilität hinsichtlich der Zusammensetzung der anhaftenden Materialschicht aufweist. Bei der Entwicklung der Erfindung konnten insoweit jedoch bestimmte Materialien identifiziert werden, für die sich das erfindungsgemäße Verfahren besonders gut eignen. Bevorzugt ist nämlich ein erfindungsgemäßes Verfahren, wobei die anhaftende Materialschicht ein oder mehrere Polymere umfasst, die ausgewählt sind aus der Gruppe bestehend aus Polyacrylaten, Polymethacrylaten, Polyurethanen, Silikonen, Naturkautschuk und synthetischen Kautschuken, wobei die anhaftende Materialschicht bevorzugt weitere Additive umfasst, die ausgewählt sind aus der Gruppe bestehend aus Füllstoffen, insbesondere Ruß und Silika, Klebharzen, Vernetzern, Stabilisatoren und Lösungsmitteln.

Mit dem erfindungsgemäßen Verfahren lassen sich grundsätzlich auch anhaftende Materialschichten leichter ablösen, die im Wesentlichen ausgehärtet sind, wie beispielsweise ausgehärtete Klebstoffschichten oder schwefelvernetzte Kautschukmassen. Auch wenn die Erwärmung entsprechender Schichten zu einer verbesserten Entfernbarkeit führt, wird der erzielbare Effekt teilweise jedoch als unzureichend empfunden, so dass weitere Maßnahme nötig sein können. Es hat sich gezeigt, dass besonders zuverlässige Ergebnisse mit dem erfindungsgemäßen Verfahren insbesondere dann erzielt werden, wenn es sich bei der anhaftenden Materialschicht um eine pastöse Materialschicht handelt, die im Falle von Kunststoffen beispielsweise nicht völlig ausgehärtet ist. Bevorzugt ist daher ein erfindungsgemäßes Verfahren, wobei die anhaftende Materialschicht eine pastose Materialschicht ist. Der Fachmann kann Materialschichten prinzipiell zwanglos als pastose Materialschichten identifizieren. Im Rahmen der vorliegenden Erfindung wird eine Materialschicht aber vorzugsweise dann als pastose Materialschicht angesehen, wenn diese bei 25 °C eine Viskosität von mehr als 5000 Pa s, besonders bevorzugt eine Viskosität im Bereich von 5000 Pa s bis 500000 Pa s, aufweist.

In Übereinstimmung mit den vorstehenden Ausführungen hat es sich als vorteilhaft erwiesen, wenn die anhaftende Materialschicht so ausgeführt ist, dass die im erfindungsgemäßen Verfahren induzierte Temperaturerhöhung zu einer Reduktion der Adhäsion am Fahrzeugreifen oder der Viskosität führt. Ersteres ist zum Beispiel häufig der Fall, wenn die anhaftende Materialschicht beispielsweise über einen Schmelzklebstoff befestigt ist, wohingegen der zweite Fall beispielsweise für thermoplastische Kunststoffe beobachtet wird. Bevorzugt ist somit ein erfindungsgemäßes Verfahren, wobei die anhaftende Materialschicht so ausgebildet ist, dass die Adhäsion der anhaftenden Materialschicht an dem Fahrzeugreifen und/oder die Viskosität der anhaftenden Materialschicht mit steigender Temperatur abnehmen, bevorzugt um mehr als 10 %, besonders bevorzugt um mehr als 20 %, ganz besonders bevorzugt um mehr als 30 %.

Um das erfindungsgemäße Verfahren besonders effizient ausführen zu können, hat es sich als vorteilhaft erwiesen, den Fahrzeugreifen in einer Aufhängung zu platzieren, in der dieser idealerweise auch rotiert werden kann, sodass anhaftende Materialschichten an unterschiedlichen Stellen des Fahrzeugreifens gut zugänglich sind und leicht mit dem erfindungsgemäßen Verfahren entfernt werden können. Bevorzugt ist also ein erfindungsgemäßes Verfahren, wobei der Fahrzeugreifen in Schritt a) in einem Halteelement bereitgestellt wird, das dazu eingerichtet ist, den Fahrzeugreifen um dessen Reifenachse zu rotieren. Bevorzugt ist insoweit auch ein erfindungsgemäßes Verfahren, wobei der Fahrzeugreifen in während Schritt b) und/oder Schritt c) um die Reifenachse rotiert wird, und/oder wobei die Schritte b) und c) zeitgleich an unterschiedlichen Stellen des Fahrzeugreifens ausgeführt werden. In einer entsprechenden Anordnung ist es besonders leicht möglich, einen Abschnitt der anhaftenden Materialschicht zunächst durch das Bestrahlen mit elektromagnetischer Strahlung zu erwärmen, um anschließend den Fahrzeugreifen ein Stück um seine Achse zu rotieren, sodass der zuvor bestrahlte Bereich nunmehr einer mechanischen Bearbeitung zum Auftrennen des Verbundes unterzogen werden kann, während die elektromagnetische Strahlung bereits einen weiteren Bereich der anhaftenden Materialschicht beaufschlagt und diesen erwärmt.

Es kann als Vorteil des erfindungsgemäßen Verfahrens gesehen werden, dass dieses hinsichtlich der einzusetzenden elektromagnetischen Strahlung sehr flexibel ist und insoweit auch auf bestimmte anhaftende Materialschichten abgestimmt werden kann. Durch die geeignete Wahl der Wellenlänge der elektromagnetischen Strahlung können zum Beispiel bestimmte anhaftende Materialschichten selektiv neben anderen anhaftenden Materialschichten entfernt werden, wenn lediglich eine der Materialschichten für die eingesetzte elektromagnetische Strahlung eine Absorption zeigt, die in einer Erwärmung des Materials resultiert. Die Auswahl einer geeigneten Wellenlänge für die elektromagnetische Strahlung kann der Fachmann tabellierten Werken entnehmen oder in grundlegenden Versuchen selbst ermitteln. Mit Blick auf die für die Reifenindustrie relevantesten Arten von anhaftenden Materialschichten hat sich der Einsatz von Infrarotstrahlung als besonders zielführend erwiesen. Infrarotstrahlung wird im Wesentlichen von allen in der Reifenindustrie relevanten anhaftenden Materialschichten ausreichend absorbiert und ist in der Lage, diese zu erwärmen. Entsprechend ist es bevorzugt, als Strahlenquelle einen Infrarotstrahler einzusetzen. Grundsätzlich ist es insoweit möglich, beliebige Strahlungsquellen einzusetzen, die zumindest eine gewisse Intensität der Emission bei infraroten Wellenlängen zeigen. Unter der Maßgabe eines möglichst energieeffizienten Verfahrens ist es jedoch bevorzugt, wenn der Infrarotstrahler und infolgedessen die elektromagnetische Strahlung die maximale Intensität der Immissionen bzw. das Intensitätsmaximum im Spektrum bei einer Wellenlänge im infraroten Bereich aufweisen, um die in anderen Spektralbereichen abgegebene Energie zu minimieren. Bevorzugt ist somit ein erfindungsgemäßes Verfahren, wobei die elektromagnetische Strahlung in Schritt b) von einem Infrarotstrahler als Strahlungsquelle erzeugt wird, wobei der Infrarotstrahler bevorzugt die maximale Intensität der Emission bei einer Wellenlänge im Bereich von 780 bis 50000 nm, besonders bevorzugt im Bereich von 780 bis 3000 nm, ganz besonders bevorzugt im Bereich von 780 bis 1400 nm, aufweist. Bevorzugt ist entsprechend auch ein erfindungsgemäßes Verfahren, wobei die elektromagnetische Strahlung in Schritt b) das Intensitätsmaximum bei einer Wellenlänge im Bereich von 780 bis 50000 nm, besonders bevorzugt im Bereich von 780 bis 3000 nm, ganz besonders bevorzugt im Bereich von 780 bis 1400 nm, aufweist.

In eigenen Versuchen wurde erkannt, dass für ein effizientes Ablösen die Temperatur der anhaftenden Materialschicht relativ deutlich erhöht werden sollte, um ein gutes Ablösen zu ermöglichen. Bevorzugt ist ein erfindungsgemäßes Verfahren, wobei die anhaftende Materialschicht in Schritt b) zumindest abschnittsweise auf eine Temperatur von 60 °C oder mehr, bevorzugt 80 °C oder mehr, erwärmt wird.

Auch wenn es grundsätzlich denkbar wäre, größere Teile des Reifens und/oder großflächig anhaftende Materialschichten gleichzeitig zu erwärmen, beispielsweise durch den Einsatz von mehreren Strahlungsquellen, ist es mit Blick auf eine energieeffiziente Verfahrensführung eindeutig bevorzugt, dass in Schritt b) ein lokales Erwärmen erfolgt, d. h. die anhaftende Materialschicht lediglich abschnittsweise bestrahlt und infolgedessen erwärmt wird. Dies ist besonders vorteilhaft, weil durch das lokale Erwärmen und anschließende Entfernen der anhaftenden Materialschicht in einem schrittweisen Verfahren vergleichsweise wenig Wärme durch Abkühlen verloren geht. Bevorzugt ist folglich ein erfindungsgemäßes Verfahren, wobei das Erwärmen in Schritt b) ein lokales Erwärmen ist.

In dem erfindungsgemäßen Verfahren wäre es grundsätzlich möglich, beispielsweise durch den sehr breitflächigen und unfokussierten Einsatz von mehreren Infrarotstrahlern, auch den Fahrzeugreifen mitzuerwärmen. Im Lichte der Aufgabenstellung ist jedoch klar, dass eine entsprechende Verfahrensführung weniger bevorzugt ist. Tatsächlich ist es zielführend, das erfindungsgemäße Verfahren so zu führen, dass im Wesentlichen nur die anhaftenden Materialschichten erwärmt werden. Dies lässt sich dadurch ausdrücken, dass die durchschnittliche Temperatur des Fahrzeugreifens im erfindungsgemäßen Verfahren unterhalb bestimmter Grenzwerte liegen sollte. Dies ist insbesondere deshalb vorteilhaft, weil dadurch ein unnötiger Energieeintrag in den Fahrzeugreifen und eine dadurch zu befürchtende vorzeitige Alterung vermieden werden kann. Bevorzugt ist demnach ein erfindungsgemäßes Verfahren, wobei der Fahrzeugreifen in Schritt b) zu jedem Zeitpunkt eine durchschnittliche Temperatur von 50 °C oder weniger, bevorzugt von 40 °C oder weniger, besonders bevorzugt von 30 °C oder weniger, aufweist.

Auch wenn es grundsätzlich möglich ist, eine an der Reifeninnenfläche anhaftende Materialschicht durch eine entsprechende Ausrichtung der Strahlungsquelle von außerhalb des Reifens zu bestrahlen, ist es doch vorteilhaft, die Strahlungsquelle direkt in die Nähe der anhaftenden Materialschicht zu bringen und einen ununterbrochenen Strahlengang zwischen der anhaftenden Materialschicht und der Strahlenquelle sicherzustellen. Es kann als großer Vorteil des erfindungsgemäßen Verfahrens angesehen werden, dass dieses hierfür die notwendige Flexibilität mitbringt. Bevorzugt ist nämlich ein erfindungsgemäßes Verfahren, wobei die Strahlungsquelle in Schritt b) zwischen die Wülste eines Fahrzeugluftreifens eingebracht wird, um eine an der Reifeninnenfläche anhaftende Materialschicht zu bestrahlen.

Grundsätzlich ist das erfindungsgemäße Verfahren nicht dahingehend beschränkt, wie letztendlich das mechanische Auftrennen zu erfolgen hat. In der Praxis hat es sich jedoch als besonders vorteilhafte Ausgestaltung erwiesen, wenn das mechanische Auftrennen durch ein Trennwerkzeug, bei dem es sich beispielsweise um einen Spachtel handeln kann, erfolgt. Alternativ ist es möglich, dass mechanische Auftrennen durch Applikation einer Zugkraft zu bewirken. Dies kann beispielsweise dadurch erfolgen, dass eine stempelartige Vorrichtung kontaktiert wird, deren Oberfläche stärker an der anhaftenden Materialschicht haftet als diese am Fahrzeugreifen, wobei hier auch Drahtgeflechte oder andere strukturierte Oberflächen für die stempelartige Vorrichtung in Frage kommen. Nach Kontaktieren mit einem solchen Haftstempel kann dieser relativ zur Oberfläche bewegt werden, um die anhaftende Materialschicht abzuziehen. Mit Blick auf eine möglichst saubere Entfernung ist es besonders bevorzugt, wenn beide Methoden des Auftrennens in Kombination zum Einsatz kommen. Bevorzugt ist somit ein erfindungsgemäßes Verfahren, wobei das mechanische Auftrennen des Verbundes durch ein Trennwerkzeug erfolgt oder unterstützt wird, bevorzugt durch einen Spachtel, und/oder wobei das mechanische Auftrennen durch Beaufschlagen der anhaftenden Materialschicht mit einer Zugkraft erfolgt oder unterstützt wird, wobei die anhaftende Materialschicht vorzugsweise mit einem Werkzeug kontaktiert wird, welches eine Oberfläche aufweist, zu der die anhaftende Materialschicht eine höhere Adhäsion aufweist als zum Fahrzeugluftreifen.

Die Erfindung betrifft zudem eine Vorrichtung zum Entfernen von anhaftenden Materialschichten von der Oberfläche eines Fahrzeugreifens, bevorzugt in einem erfindungsgemäßen Verfahren, umfassend:
x) ein Halteelement zur Aufnahme eines Fahrzeugreifens, insbesondere eines Fahrzeugluftreifens,
y) einen oder mehrere Infrarotstrahler als Strahlungsquelle, und
z) ein oder mehrere Trennwerkzeuge,

wobei die Vorrichtung dazu eingerichtet ist, dass ein im Halteelement angeordneter Fahrzeugreifen um die Reifenachse rotiert werden kann,
wobei der eine oder die mehreren Infrarotstrahler so angeordnet sind, dass die erzeugte elektromagnetische Strahlung auf die Oberfläche eines im Halteelement angeordneten Fahrzeugreifen auftrifft,
wobei das eine oder die mehreren Trennwerkzeuge dazu eingerichtet sind, relativ zu einem im Halteelement angeordneten Fahrzeugreifen abgesenkt oder angehoben zu werden.

Die erfindungsgemäße Vorrichtung ist besonders geeignet zur Durchführung eines erfindungsgemäßen Verfahrens.

Erfindungsgemäß umfasst die Vorrichtung ein Halteelement, ein oder mehrere Infrarotstrahler und ein oder mehrere Trennwerkzeuge. Es ist ersichtlich, dass die erfindungsgemäße Vorrichtung damit der Durchführung eines bevorzugten erfindungsgemäßen Verfahrens dienen kann.

Das für das erfindungsgemäße Verfahren noch optionale Halteelement zur Aufnahme eines Fahrzeugreifens hat sich mit Blick auf die Auslegung der erfindungsgemäßen Vorrichtung als wesentlich erwiesen, um eine für die industrielle Praxis relevante Durchführung des Verfahrens zu ermöglichen.

Um eine hohe Flexibilität hinsichtlich der abzulösenden anhaftenden Materialschichten zu gewährleisten, hat sich der Einsatz eines Infrarotstrahlers als Strahlungsquelle bewährt, da dieser für im Wesentlichen alle in der Reifenindustrie auftretenden anhaftenden Materialschichten eine zumindest ausreichende Erwärmungsleistung liefert. Insbesondere mit Blick auf den Aspekt der Robustheit der zu erhaltenden Vorrichtung und die notwendigen arbeitssicherheitstechnischen Vorkehrungen hat sich der Infrarotstrahler als die vorteilhafteste Strahlungsquelle erwiesen, wenn es darum geht, eine Vorrichtung anzugeben, die in der industriellen Reifenfertigung besonders effizient eingesetzt werden kann.

Auch wenn es wie vorstehend erläutert möglich ist, das mechanische Auftrennen vollständig durch Applikation einer Zugkraft zu bewirken, ist es mit Blick auf die Geschwindigkeit der Entfernung in einer erfindungsgemäßen Vorrichtung zielführend, Trennwerkzeuge vorzusehen, beispielsweise Spatel, die die anhaftenden Materialschichten von der unterliegenden Oberfläche des Fahrzeugreifens abtrennen.

Erfindungsgemäß werden die Infrarotstrahler so angeordnet, dass die von ihnen erzeugte elektromagnetische Strahlung auf die Oberfläche des im Halteelements angeordneten Fahrzeugreifens auftreffen kann, beispielsweise auf die profilierte Lauffläche des Fahrzeugreifens oder auch auf die Reifeninnenseite eines Fahrzeugreifens.

Das eine oder die mehreren Trennwerkzeuge sind dazu eingerichtet, relativ zu einem im Halteelemente angeordneten Fahrzeugreifen abgesenkt oder abgehoben zu werden. Dies ist besonders wichtig, da das Auswechseln von Fahrzeugreifen in der erfindungsgemäßen Vorrichtung deutlich erschwert würde, wenn die Trennwerkzeuge in der Stellung fixiert wären, in der sie ein Auftrennen des Verbundes zwischen der anhaftenden Materialschicht und dem Fahrzeugreifen bewirken können, was naturgemäß im Wesentlichen im unmittelbaren Kontakt mit der Oberfläche des Fahrzeugreifens ist. Vorteilhafterweise wird durch die erfindungsgemäße Anordnung auch möglich, Fahrzeugreifen verschiedener Größen in der gleichen Vorrichtung anzusetzen. In diesem Fall werden die vorgesehenen Trennwerkzeuge lediglich auf die hierfür notwendige Tiefe relativ zum Fahrzeugreifen abgesenkt, sodass dieser auf der Oberfläche aufliegt.

Auch wenn es grundsätzlich möglich ist, dass ein Arbeiter den Fahrzeugreifen händisch rotiert, ist es bevorzugt, wenn dieses durch eine Antriebseinheit erfolgen kann. Ebenso ist es vorteilhaft, wenn auch die Bewegung der Infrarotstrahler, beispielsweise das Hinein- und Herausfahren in die Reifenwulst eines Fahrzeuglustreifens und/oder der Trennwerkzeuge, d. h. das Absenken und Anheben, durch eine Antriebseinheit bewirkt wird, wobei in sämtlichen Fällen bevorzugt ist, wenn die Steuerung der Rotation, der Infrarotstrahler und der Trennwerkzeuge durch eine Steuerungseinrichtung automatisiert werden kann. Auch wenn dies beispielsweise im Bereich der Reifenaufbereitung für ein späteres Recycling zumeist nicht notwendig ist, hat es sich mit Blick auf den Einsatz des erfindungsgemäßen Verfahrens und der entsprechenden Vorrichtung in der Reifenfertigung als besonders vorteilhaft erwiesen, neben den Strahlungsquellen und den Trennwerkzeugen zudem eine Sensoreinheit vorzusehen, die der Überprüfung der freigelegten Oberfläche dient. Eine entsprechende Sensoreinheit kann sicherstellen, dass die Entfernung der anhaftenden Materialschicht ausreichend bzw. vollständig erfolgt ist, sodass der erhaltene Reifen wieder den erforderlichen Spezifikationen entspricht. Bevorzugt ist somit zusammenfassend eine erfindungsgemäße Vorrichtung, zusätzlich umfassend
t) eine erste Antriebseinheit zur Rotation eines im Halteelement angeordneten Fahrzeugreifens, und/oder
u) eine zweite Antriebseinheit zur Bewegung des einen oder der mehreren Infrarotstrahler und/oder des einen oder der mehreren Trennwerkzeuge, und/oder
v) eine Steuerungseinrichtung zur Steuerung der Rotationsgeschwindigkeit eines im Halteelement angeordneten Fahrzeugreifens und/oder der Ausrichtung des einen oder der mehreren Infrarotstrahler und/oder der Position des einen oder der mehreren Trennwerkzeuge, und/oder
w) eine oder mehrere Sensoreinheiten, insbesondere optische Sensoren, zur Überprüfung der Oberfläche eines im Halteelement angeordneten Fahrzeugreifens.

Wie vorstehend erläutert, ist es besonders zeit- und energieeffizient, wenn das Auftrennen des Verbundes in Schritt c) an solchen Stellen erfolgt, die unmittelbar zuvor durch das Bestrahlen mit elektromagnetischer Strahlung erwärmt wurden. Mit Blick auf die Energieeffizienz ist es jedoch nicht anstrebenswert, das mechanische Auftrennen durch Werkzeuge an eben jener Stelle vorzunehmen, die gerade bestrahlt wird, da dies dazu führen würde, dass ein Großteil der elektromagnetischen Strahlung lediglich der Erwärmung des Werkzeuges dient und damit für den eigentlichen Zweck verloren wäre. Insoweit ist es besonders vorteilhaft, die Schritte des Bestrahlens und des mechanischen Auftrennens räumlich direkt hintereinander anzuordnen, was in der erfindungsgemäßen Vorrichtung dadurch realisiert werden kann, dass die Strahlungsquelle und die Trennwerkzeuge bezogen auf die Rotationsrichtung hintereinander angeordnet werden. Bevorzugt ist entsprechend eine erfindungsgemäße Vorrichtung, wobei das eine oder die mehreren Trennwerkzeuge so angeordnet sind, dass sie bezogen auf die Rotationsrichtung eines im Halteelement angeordneten Fahrzeugreifens hinter dem einen oder den mehreren Infrarotstrahlern angeordnet sind, sodass diese auf Abschnitte des Fahrzeugreifens einwirken können, die zuvor mit elektromagnetischer Strahlung beaufschlagt wurden.

Insbesondere für den besonders relevanten Fall der Aufarbeitung von selbstdichtenden Fahrzeugluftreifen, die eine Entfernung von anhaftenden Materialschichten von der Innenseite des Fahrzeugluftreifens erforderlich machen, hat es sich als besonders vorteilhaft erwiesen, die erfindungsgemäße Vorrichtung so auszuführen, dass die Infrarotstrahler bzw. die Trennwerkzeuge im Betrieb in die Wülste des Fahrzeugreifens hineinfahren können, um eine unmittelbare Bearbeitung der Innenfläche des Fahrzeugluftreifens zu ermöglichen. Bevorzugt ist eine erfindungsgemäße Vorrichtung, wobei der eine oder die mehreren Infrarotstrahler so angeordnet sind, dass die erzeugte elektromagnetische Strahlung auf die Reifeninnenfläche eines im Halteelement angeordneten Fahrzeugreifens gerichtet ist, wobei der eine oder die mehreren Infrarotstrahler im Betrieb vorzugsweise zwischen den Wülsten eines im Halteelement angeordneten Fahrzeugreifens liegen, und/oder wobei das eine oder die mehreren Trennwerkzeuge so angeordnet sind, dass diese auf die Reifeninnenfläche eines im Halteelement angeordneten Fahrzeugreifens abgesenkt werden können, wobei das eine oder die mehreren Trennwerkzeuge im Betrieb vorzugsweise zwischen den Wülsten eines im Halteelement angeordneten Fahrzeugreifens liegen.

Im Lichte der vorstehenden Ausführungen ist ersichtlich, dass die Erfindung auch die Verwendung von elektromagnetischer Strahlung, welche ihr Intensitätsmaximum bei einer Wellenlänge im Bereich von 780 bis 50000 nm, besonders bevorzugt im Bereich von 780 bis 3000 nm, ganz besonders bevorzugt im Bereich von 780 bis 1400 nm, aufweist, zum energieeffizienten Entfernen von anhaftenden Materialschichten von der Oberfläche eines Fahrzeugreifens betrifft.

Nachfolgend werden bevorzugte Ausführungsformen der Erfindung unter Bezugnahme auf die beiliegende Zeichnung näher erläutert und beschrieben. Dabei zeigt:

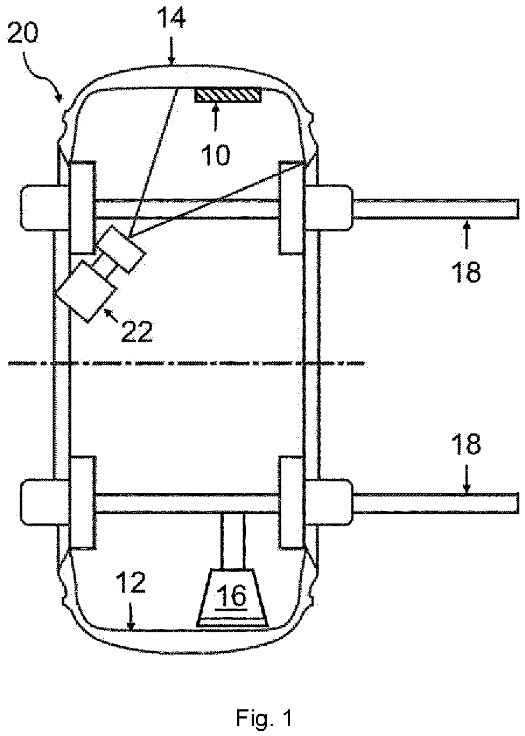

- Fig. 1: eine schematische Darstellung einer erfindungsgemäßen Vorrichtung bei der Durchführung des erfindungsgemäßen Verfahrens in einer bevorzugten Ausführungsform.

Fig. 1 zeigt eine vereinfachte, schematische Darstellung einer erfindungsgemäßen Vorrichtung 20 in einer bevorzugten Ausführungsform, aus der auch der Schritt b) des erfindungsgemäßen Verfahrens in einer bevorzugten Ausführungsform ersichtlich ist.

Fig. 1 zeigt einen Fahrzeugreifen 14, der vorliegend als Fahrzeugluftreifen ausgeführt ist. Dieser ist in einer erfindungsgemäßen Vorrichtung 20 angeordnet und in dieser im Halteelement 18 aufgehangen, welches zur Aufnahme von Fahrzeugreifen 14 eingerichtet ist.

Die Vorrichtung 20 ist dazu eingerichtet, den im Halteelement 18 angeordneten Fahrzeugreifen 14 um die Reifenachse zu rotieren, die vorliegend durch eine gestrichelte Linie eingezeichnet ist. An der Innenseite ist die Oberfläche 12 des Fahrzeugreifens 14 von einer anhaftenden Materialschicht 10 bedeckt. Diese anhaftende Materialschicht 10 wird in dem in Fig. 1 gezeigten Arbeitsschritt mit elektromagnetischer Strahlung bestrahlt und infolge dieser Bestrahlung erwärmt. Die elektromagnetische Strahlung wird dabei von einer Strahlungsquelle 22 erzeugt, bei der es sich im vorliegenden Beispiel um einen Infrarotstrahler handelt, der so angeordnet ist, dass die erzeugte elektromagnetische Strahlung auf die Oberfläche 12 des Fahrzeugreifens 14 auftreffen kann, insbesondere in dem Bereich, in dem die anhaftende Materialschicht 10 vorliegt.

Im unteren Bereich der Vorrichtung 20 ist zudem ein Trennwerkzeug 16 angeordnet, welches als Spachtel ausgebildet ist, und welches relativ zu dem im Halteelement 18 angeordnet Fahrzeugreifen 14 abgesenkt und angehoben werden kann. Dieses Trennwerkzeug 16 dient dem mechanischen Auftrennen des Verbundes zwischen der Oberfläche 12 des Fahrzeugreifens 14 und der erwärmten anhaftenden Materialschicht 10, sodass die anhaftende Materialschicht 10 leicht entfernt werden kann.

Bei dem Fig. 1 gezeigten Fahrzeugreifen 14 kann es sich beispielsweise um einen Fahrzeugluftreifen mit einem typischen Fertigungsfehler handeln, wie er bspw. beim Auftragen eines Dicht- oder Verbundmittels entstehen kann, welches bei der Fertigung selbstdichtender Fahrzeugluftreifen zum Einsatz kommt. Der Fahrzeugreifen 14 selbst umfasst im gezeigten Beispiel eine schwefelvernetzte Kautschukmischung und ist mit der anhaftenden Materialschicht 10 über eine adhäsive Wechselwirkung verbunden.

Die anhaftende Materialschicht 10 umfasst im gezeigten Beispiel eine Kautschukmischung, die neben Naturkautschuk und dem synthetischen Kautschuk SSBR auch weitere Additive, insbesondere Ruß, umfasst. Die noch nicht ausgehärtete anhaftende Materialschicht 10 ist somit eine pastose Materialschicht. Infolge der Erwärmung sinkt die Adhäsion der anhaftenden Materialschicht 10 und deren Viskosität, wobei das Erwärmen im dargestellten Beispiel im Wesentlichen ausschließlich durch die von der Strahlungsquelle 22 emittierte elektromagnetische Strahlung erfolgt.

Um ein einfaches Entfernen der anhaftenden Materialschicht 10 zu gewährleisten, wird die anhaftende Materialschicht 10 im gezeigten Beispiel auf 80 °C erwärmt, wobei durch ein ausschließlich lokales Erwärmen sichergestellt wird, dass die durchschnittliche Temperatur des Fahrzeugreifens 14 im Wesentlichen der Raumtemperatur, beispielsweise 23 °C entspricht.

In dem in Fig. 1 gezeigten Beispiel ist die Strahlungsquelle 22 so angeordnet, dass die von ihr emittierte Strahlung ungehindert auf die anhaftende Materialschicht 10 auftreffen kann, was vorliegend auch dadurch bewirkt wird, dass das Halteelement 18 die Wülste des Fahrzeugreifens 14 zumindest teilweise aufspreizt. In Fig. 1 nicht gezeigt sind die Antriebseinheiten für die Rotation des Halteelements 18 bzw. die Bewegung der Strahlungsquelle 22 und des Trennwerkzeuges 16 sowie die Steuerungseinrichtung, die eine automatisierte Steuerung dieser Elemente ermöglicht. Wie in Fig. 1 ersichtlich, ist das Trennwerkzeug 16 in der dargestellten Form im Betrieb relativ zur Oberfläche 12 des Fahrzeugreifens 14 abgesenkt und dadurch zwischen den Wülsten des im Halteelement 18 angeordneten Fahrzeugreifens 14 platziert.

### Bezugszeichenliste

- 10: Anhaftende Materialschicht
- 12: Oberfläche
- 14: Fahrzeugreifen
- 16: Trennwerkzeug
- 18: Halteelement
- 20: Vorrichtung
- 22: Strahlungsquelle

## Patentansprüche

1. Verfahren zum Entfernen von anhaftenden Materialschichten (10) von der Oberfläche (12) eines Fahrzeugreifens (14), umfassend die Schritte:
a) Bereitstellen eines Fahrzeugreifens (14), wobei die Oberfläche (12) des Fahrzeugreifens (14) zumindest teilweise von einer anhaftenden Materialschicht (10) bedeckt ist,
b) Bestrahlen der anhaftenden Materialschicht (10) mit elektromagnetischer Strahlung zur Erwärmung der anhaftenden Materialschicht (10), und
c) Mechanisches Auftrennen des Verbundes zwischen der Oberfläche (12) des Fahrzeugreifens (14) und der erwärmten anhaftenden Materialschicht (10) zum Entfernen der anhaftenden Materialschicht (10).

2. Verfahren nach Anspruch 1, wobei die elektromagnetische Strahlung in Schritt b) das Intensitätsmaximum bei einer Wellenlänge im Bereich von 780 bis 50000 nm, besonders bevorzugt im Bereich von 780 bis 3000 nm, ganz besonders bevorzugt im Bereich von 780 bis 1400 nm, aufweist.

3. Verfahren nach einem der Ansprüche 1 oder 2, wobei die anhaftende Materialschicht (10) in Schritt b) zumindest abschnittsweise auf eine Temperatur von 60 °C oder mehr, bevorzugt 80 °C oder mehr, erwärmt wird.

4. Verfahren nach einem der Ansprüche 1 bis 3, wobei der Fahrzeugreifen (14) in Schritt b) zu jedem Zeitpunkt eine durchschnittliche Temperatur von 50 °C oder weniger, bevorzugt von 40 °C oder weniger, besonders bevorzugt von 30 °C oder weniger, aufweist.

5. Verfahren nach einem der Ansprüche 1 bis 4, wobei das mechanische Auftrennen des Verbundes durch ein Trennwerkzeug (16) erfolgt oder unterstützt wird, bevorzugt durch einen Spachtel,
und/oder
wobei das mechanische Auftrennen durch Beaufschlagen der anhaftenden Materialschicht (10) mit einer Zugkraft erfolgt oder unterstützt wird, wobei die anhaftende Materialschicht (10) vorzugsweise mit einem Werkzeug kontaktiert wird, welches eine Oberfläche aufweist, zu der die anhaftende Materialschicht (10) eine höhere Adhäsion aufweist als zum Fahrzeugreifen (14).

6. Verfahren nach einem der Ansprüche 1 bis 5, wobei die anhaftende Materialschicht (10) ein oder mehrere Polymere umfasst, die ausgewählt sind aus der Gruppe bestehend aus Polyacrylaten, Polymethacrylaten, Polyurethanen, Silikonen, Naturkautschuk und synthetischen Kautschuken, wobei die anhaftende Materialschicht bevorzugt weitere Additive umfasst, die ausgewählt sind aus der Gruppe bestehend aus Füllstoffen, insbesondere Ruß und Silika, Klebharzen, Vernetzern, Stabilisatoren und Lösungsmitteln.

7. Verfahren nach einem der Ansprüche 1 bis 6, wobei die anhaftende Materialschicht (10) so ausgebildet ist, dass die Adhäsion der anhaftenden Materialschicht (10) an dem Fahrzeugreifen (14) und/oder die Viskosität der anhaftenden Materialschicht (10) mit steigender Temperatur abnehmen.

8. Verfahren nach einem der Ansprüche 1 bis 7, wobei der Fahrzeugreifen in Schritt a) in einem Halteelement (18) bereitgestellt wird, das dazu eingerichtet ist, den Fahrzeugreifen (14) um dessen Reifenachse zu rotieren,
und/oder
wobei der Fahrzeugreifen (14) während Schritt b) und/oder Schritt c) um die Reifenachse rotiert wird.

9. Vorrichtung (20) zum Entfernen von anhaftenden Materialschichten (10) von der Oberfläche (12) eines Fahrzeugreifens (14), bevorzugt in einem Verfahren nach einem der Ansprüche 1 bis 8, umfassend
x) ein Halteelement (18) zur Aufnahme eines Fahrzeugreifens (14), insbesondere eines Fahrzeugluftreifens,
y) einen oder mehrere Infrarotstrahler als Strahlungsquelle (22), und
z) ein oder mehrere Trennwerkzeuge (16),
wobei die Vorrichtung (20) dazu eingerichtet ist, dass ein im Halteelement (18) angeordneter Fahrzeugreifen (14) um die Reifenachse rotiert werden kann,
wobei der eine oder die mehreren Infrarotstrahler so angeordnet sind, dass die erzeugte elektromagnetische Strahlung auf die Oberfläche (12) eines im Halteelement (18) angeordneten Fahrzeugreifen (14) auftrifft,
wobei das eine oder die mehreren Trennwerkzeuge (16) dazu eingerichtet sind, relativ zu einem im Halteelement (18) angeordneten Fahrzeugreifen (14) abgesenkt oder angehoben zu werden.

10. Verwendung von elektromagnetischer Strahlung, welche ihr Intensitätsmaximum bei einer Wellenlänge im Bereich von 780 bis 50000 nm, besonders bevorzugt im Bereich von 780 bis 3000 nm, ganz besonders bevorzugt im Bereich von 780 bis 1400 nm, aufweist, zum energieeffizienten, lokalen Erwärmen von anhaftenden Materialschichten (10) auf der Oberfläche (12) eines Fahrzeugreifens (14) und anschließendes, schrittweises Entfernen der Materialschicht.

## Claims

1. Method for removing adhering material layers (10) from the surface (12) of a vehicle tyre (14), comprising the steps of:
a) providing a vehicle tyre (14), the surface (12) of the vehicle tyre (14) being at least partially covered by an adhering material layer (10),
b) irradiating the adhering material layer (10) with electromagnetic radiation to heat the adhering material layer (10), and
c) mechanically breaking the bond between the surface (12) of the vehicle tyre (14) and the heated adhering material layer (10) to remove the adhering material layer (10).

2. Method according to Claim 1, the electromagnetic radiation in step b) being at the maximum intensity at a wavelength in the range from 780 to 50 000 nm, particularly preferably in the range from 780 to 3000 nm, most particularly preferably in the range from 780 to 1400 nm.

3. Method according to either of Claims 1 and 2, at least a section of the adhering material layer (10) being heated in step b) to a temperature of 60°C or more, preferably 80°C or more.

4. Method according to one of Claims 1 to 3, the vehicle tyre (14) having an average temperature at any point in time in step b) of 50°C or less, preferably 40°C or less, particularly preferably of 30°C or less.

5. Method according to one of Claims 1 to 4, the mechanical breaking of the bond being performed or assisted by a separating tool (16), preferably by a scraper,
and/or
the mechanical separation being performed or assisted by applying a pulling force to the adhering material layer (10), the adhering material layer (10) preferably being contacted by a tool which has a surface with respect to which the adhering material layer (10) has a greater adhesion than with respect to the vehicle tyre (14).

6. Method according to one of Claims 1 to 5, the adhering material layer (10) comprising one or more polymers selected from the group consisting of polyacrylates, polymethacrylates, polyurethanes, silicones, natural rubber and synthetic rubbers, the adhering material layer preferably comprising further additives selected from the group consisting of fillers, in particular carbon black and silica, adhesive resins, crosslinking agents, stabilizers and solvents.

7. Method according to one of Claims 1 to 6, the adhering material layer (10) being formed such that the adhesion of the adhering material layer (10) to the vehicle tyre (14) and/or the viscosity of the adhering material layer (10) decrease(s) with increasing temperature.

8. Method according to one of Claims 1 to 7, the vehicle tyre being provided in step a) in a holding element (18), which is designed to rotate the vehicle tyre (14) about its tyre axis,
and/or
the vehicle tyre (14) being rotated about the tyre axis during step b) and/or step c).

9. Device (20) for removing adhering material layers (10) from the surface (12) of a vehicle tyre (14), preferably in a method according to one of Claims 1 to 8, comprising
x) a holding element (18) for receiving a vehicle tyre (14), in particular a pneumatic vehicle tyre,
y) one or more infrared heaters as a radiation source (22), and
z) one or more separating tools (16),
the device (20) being designed for the purpose that a vehicle tyre (14) arranged in the holding element (18) can be rotated about the tyre axis,
the one or more infrared heaters being arranged such that the electromagnetic radiation generated impinges on the surface (12) of a vehicle tyre (14) arranged in the holding element (18),
the one or more separating tools (16) being designed to be lowered or raised in relation to a vehicle tyre (14) arranged in the holding element (18).

10. Use of electromagnetic radiation which is at its maximum intensity at a wavelength in the range from 780 to 50 000 nm, particularly preferably in the range from 780 to 3000 nm, most particularly preferably in the range from 780 to 1400 nm, for the energy-efficient, local heating of adhering material layers (10) on the surface (12) of a vehicle tyre (14) and subsequent, step-by-step removal of the material layer.

## Revendications

1. Procédé pour enlever des couches de matériau adhérentes (10) de la surface (12) d'un pneu de véhicule (14), comprenant les étapes suivantes :
a) la fourniture d'un pneu de véhicule (14), la surface (12) du pneu de véhicule (14) étant au moins partiellement recouverte d'une couche de matériau adhérente (10),
b) l'exposition de la couche de matériau adhérente (10) à un rayonnement électromagnétique pour chauffer la couche de matériau adhérente (10), et
c) la séparation mécanique de la liaison entre la surface (12) du pneu de véhicule (14) et la couche de matériau adhérente chauffée (10) pour enlever la couche de matériau adhérente (10).

2. Procédé selon la revendication 1, dans lequel le rayonnement électromagnétique à l'étape b) présente le maximum d'intensité à une longueur d'onde dans la plage de 780 à 50 000 nm, de manière particulièrement préférée dans la plage de 780 à 3 000 nm, de manière tout particulièrement préférée dans la plage de 780 à 1 400 nm.

3. Procédé selon l'une quelconque des revendications 1 ou 2, dans lequel, à l'étape b), la couche de matériau adhérente (10) est chauffée au moins par sections à une température de 60 °C ou plus, de préférence de 80 °C ou plus.

4. Procédé selon l'une quelconque des revendications 1 à 3, dans lequel, à l'étape b), le pneu de véhicule (14) présente à tout moment une température moyenne de 50 °C ou moins, de préférence de 40 °C ou moins, de manière particulièrement préférée de 30 °C ou moins.

5. Procédé selon l'une quelconque des revendications 1 à 4, dans lequel la séparation mécanique de la liaison est effectuée ou assistée par un outil de séparation (16), de préférence par une spatule,
et/ou
dans lequel la séparation mécanique est effectuée ou assistée par sollicitation de la couche de matériau adhérente (10) avec une force de traction, la couche de matériau adhérente (10) étant de préférence mise en contact avec un outil qui présente une surface à laquelle la couche de matériau adhérente (10) présente une adhérence plus élevée qu'au pneu de véhicule (14).

6. Procédé selon l'une quelconque des revendications 1 à 5, dans lequel la couche de matériau adhérente (10) comprend un ou plusieurs polymères choisis dans le groupe constitué par les polyacrylates, les polyméthacrylates, les polyuréthanes, les silicones, le caoutchouc naturel et les caoutchoucs synthétiques, la couche de matériau adhérente comprenant de préférence d'autres additifs choisis dans le groupe constitué par les charges, notamment le noir de carbone et la silice, les résines adhésives, les agents de réticulation, les stabilisants et les solvants.

7. Procédé selon l'une quelconque des revendications 1 à 6, dans lequel la couche de matériau adhérente (10) est configurée de telle sorte que l'adhérence de la couche de matériau adhérente (10) au pneu de véhicule (14) et/ou la viscosité de la couche de matériau adhérente (10) diminuent lorsque la température augmente.

8. Procédé selon l'une quelconque des revendications 1 à 7, dans lequel le pneu de véhicule est fourni à l'étape a) dans un élément de support (18) adapté pour faire tourner le pneu de véhicule (14) autour de son axe de pneu,
et/ou
dans lequel le pneu de véhicule (14) est fait tourner autour de l'axe de pneu pendant l'étape b) et/ou l'étape c).

9. Dispositif (20) pour enlever des couches de matériau adhérentes (10) de la surface (12) d'un pneu de véhicule (14), de préférence dans un procédé selon l'une quelconque des revendications 1 à 8, comprenant
x) un élément de support (18) destiné à recevoir un pneu de véhicule (14), notamment un pneumatique de véhicule,
y) un ou plusieurs émetteurs infrarouges en tant que source de rayonnement (22), et
z) un ou plusieurs outils de séparation (16),
le dispositif (20) étant adapté pour qu'un pneu de véhicule (14) agencé dans l'élément de support (18) puisse être fait tourner autour de l'axe de pneu,
le ou les émetteurs infrarouges étant agencés de manière à ce que le rayonnement électromagnétique généré soit incident sur la surface (12) d'un pneu de véhicule (14) agencé dans l'élément de support (18),
le ou les outils de séparation (16) étant adaptés pour être abaissés ou soulevés par rapport à un pneu de véhicule (14) agencé dans l'élément de support (18).

10. Utilisation de rayonnement électromagnétique, qui présente son maximum d'intensité à une longueur d'onde dans la plage de 780 à 50 000 nm, de manière particulièrement préférée dans la plage de 780 à 3 000 nm, de manière tout particulièrement préférée dans la plage de 780 à 1 400 nm, pour le chauffage local, efficace du point de vue énergétique, de couches de matériau adhérentes (10) sur la surface (12) d'un pneu de véhicule (14) et ensuite l'enlèvement progressif de la couche de matériau.
